# DEMANDE DE BREVET EUROPEEN

(11) **EP 1 251 354 A1**
(43) Date de publication de la demande: **23.10.2002**
(21) Numéro de dépôt: 02290944.4
(22) Date de dépôt: 16.04.2002
(51) Int. Cl.: G01P 3/44, F16J 15/32

(54) **Dispositif d'étanchéité pour palier à roulement instrumenté d'un capteur de vitesse de rotation**

(30) Priorité: 18.04.2001 FR 0105252
(71) Demandeur: Aktiebolaget SKF, S-415 50 Göteborg (SE)
(72) Inventeur: Niarfeix, Francois, 37390 Cérelles (FR)
(74) Mandataire: Casalonga, Axel

(57) **Abrégé**

Le dispositif d'étanchéité pour palier à roulement 1 instrumenté comprenant une bague intérieure 4, une bague extérieure 2, au moins une rangée d'éléments roulants 6 entre un chemin de roulement 5 de la bague intérieure 4 et un chemin de roulement 3 de la bague extérieure 2, un ensemble capteur d'informations 16 comprenant un bloc capteur 23 en appui sur la bague intérieure 4, un codeur 17 en appui sur la bague extérieure 2 comprenant un support annulaire 18, une partie active 22. Le dispositif comprend un premier moyen d'étanchéité 35 coopérant avec une surface de révolution du bloc capteur 23, la portion du bloc capteur 23 supportant le capteur est située radialement à l'intérieur du codeur 17 et axialement entre le moyen d'étanchéité et le palier à roulement.

## Description

La présente invention concerne le domaine des paliers à roulements instrumentés munis d'un ensemble de détection des paramètres de rotation comme la vitesse, l'accélération ou le déplacement angulaire, et pourvus d'un dispositif d'étanchéité.

De tels paliers à roulements peuvent par exemple être utilisés sur des véhicules, et notamment associés à des systèmes anti blocage de roues. L'ensemble de détection, constitué par un bloc capteur et un élément codeur, fournit au système anti blocage les informations utiles, en particulier la vitesse de rotation de la roue.

L'invention propose un dispositif d'étanchéité pour palier à roulement instrumenté dont le bloc capteur et le codeur sont formés de façon à procurer une étanchéité améliorée, compact et économique.

L'invention propose également un dispositif d'étanchéité pour palier à roulement instrumenté pourvu de moyens d'étanchéité qui protègent l'ensemble capteur et le palier à roulement.

L'invention propose enfin un dispositif d'étanchéité pour palier à roulement instrumenté qui permet une standardisation des moyens d'étanchéité.

Un dispositif d'étanchéité pour palier à roulement instrumenté comprenant une bague intérieure, une bague extérieure, au moins une rangée d'éléments roulants entre un chemin de roulement de la bague intérieure et un chemin de roulement de la bague extérieure, un ensemble capteur d'informations comprenant un bloc capteur en appui sur une face latérale de la bague intérieure, et un codeur en appui sur une face latérale de la bague extérieure, ledit codeur comportant un support annulaire et une partie active. Le dispositif d'étanchéité comprend un premier moyen d'étanchéité coopérant avec une surface de révolution du bloc capteur. La portion du bloc capteur supportant le capteur est située radialement à l'intérieur du codeur et axialement entre le moyen d'étanchéité et le palier à roulement.

Ainsi, le dispositif d'étanchéité fournit une première étanchéité, qui assure qu'aucune pollution extérieur ne viendra polluer l'entrefer de l'ensemble capteur et perturber les mesures de l'ensemble capteur.

Dans un mode de réalisation, le premier moyen d'étanchéité est un joint à lèvre.

Avantageusement, le palier à roulement comprend du côté axialement opposé à l'ensemble capteur un moyen d'étanchéité identique au premier moyen d'étanchéité. Le moyen d'étanchéité permet par exemple de réaliser l'étanchéité de l'espace compris entre les bagues intérieure et extérieure de roulement, où se situent les éléments roulants.

Avantageusement, le dispositif d'étanchéité comprend un second moyen d'étanchéité par passage étroit, par exemple adjacent au premier moyen d'étanchéité. Le second moyen d'étanchéité permet d'obtenir une étanchéité accrue grâce à la coopération des moyens d'étanchéités adjacents.

De préférence, le joint à lèvres comprend une paroi radiale orientée du côté du bloc capteur, apte à coopérer avec une surface radiale du bloc capteur pour former le second moyen d'étanchéité par passage étroit. Ainsi, on utilise une paroi radiale du joint à lèvres pour réaliser une étanchéité supplémentaire par passage étroit.

Dans un mode de réalisation, le codeur comprend une portion radiale adjacente à la surface radiale du bloc capteur pour former le second moyen d'étanchéité par passage étroit.

Avantageusement, une portion radiale comprend une portion cylindrique s'étendant axialement à partir de la zone de plus petit diamètre de la portion radiale, à proximité d'une surface cylindrique du bloc capteur, pour former le premier moyen d'étanchéité par passage étroit.

Avantageusement, des portions radiales du bloc capteur et du codeur forment le second moyen d'étanchéité par une succession de passages étroits.

Dans un mode de réalisation, le codeur comprend une partie de fixation en saillie dans une rainure de la bague extérieure. La rainure peut être une rainure standard dans les paliers à roulement instrumentés, prévue par exemple pour la fixation d'un organe d'étanchéité. La bague extérieure est du type standard et ne nécessite pas d'opération supplémentaire de fabrication pour permettre la fixation du codeur.

Un tel dispositif d'étanchéité est particulièrement adapté pour un palier à roulement instrumenté comprenant une bague intérieure, une bague extérieure, au moins une rangée d'éléments roulants entre un chemin de roulement de la bague intérieure et un chemin de roulement de la bague extérieure, un ensemble capteur d'informations comprenant un bloc capteur en appui sur la bague intérieure, et un codeur en appui sur la bague extérieure comprenant un support annulaire, une partie active.

La présente invention et ses avantages seront mieux compris à l'étude de la description détaillée de quelques modes de réalisation pris à titre d'exemples non-limitatifs et illustrés par les dessins annexés sur lesquels :
La figure 1 est une vue en coupe axiale d'un palier à roulement instrumenté selon un aspect de l'invention ;
La figure 2 est une vue en coupe axiale d'un palier à roulement instrumenté selon un aspect de l'invention, disposé dans une roue avant d'un véhicule à deux roues ;
La figure 3 est une vue en coupe axiale d'un palier à roulement instrumenté selon un autre aspect de l'invention.

La figure 4 est une vue en coupe axiale d'un palier à roulement instrumenté selon un autre aspect de l'invention.

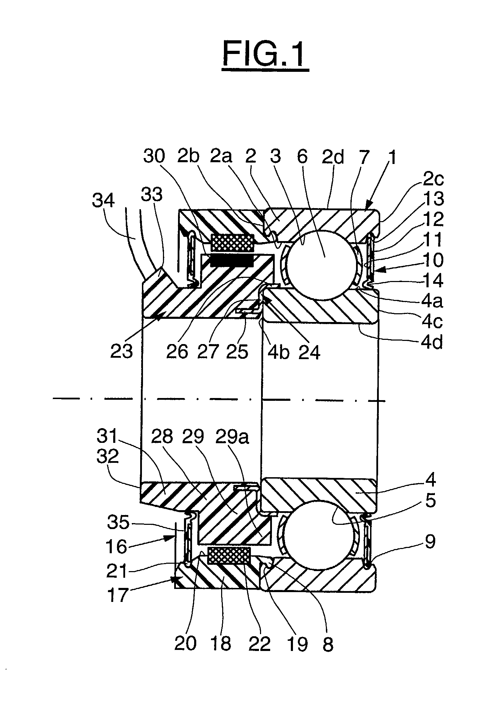

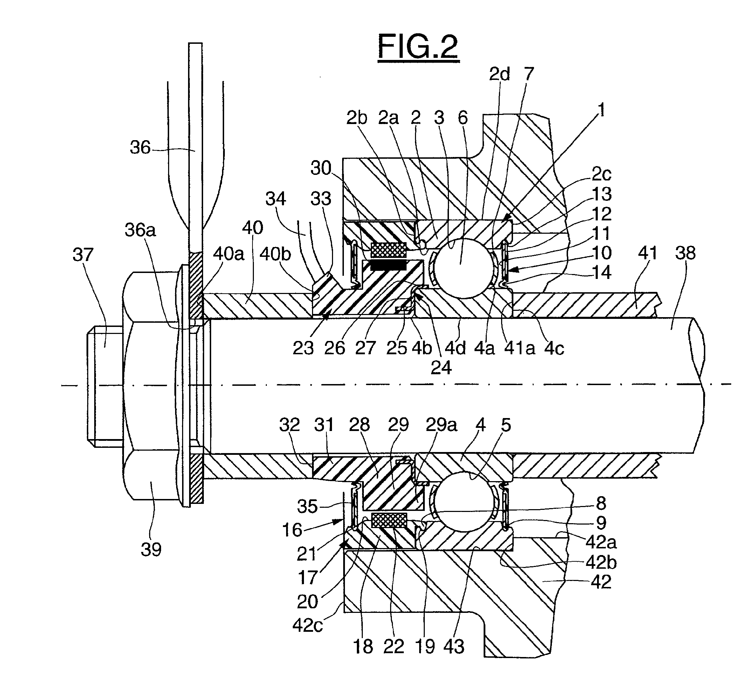

Tel que représenté sur les figures 1 et 2, un roulement 1 comprend une bague extérieure tournante 2 pourvue sur son alésage 2a d'un chemin de roulement torique 3, une bague intérieure non tournante 4 pourvue sur sa surface extérieure 4a d'un chemin de roulement torique 5, et une rangée d'éléments roulants 6, ici des billes, disposée entre le chemin de roulement 3 de la bague extérieure 2 et le chemin de roulement 5 de la bague intérieure 4. Les éléments roulants 6 sont maintenus par une cage 7 à espacement circonférentiel régulier.

La bague extérieure 2 est également pourvue de deux surfaces latérales radiales 2b, 2c opposées et d'une surface extérieure cylindrique 2d. Deux rainures 8 et 9 symétriques par rapport au plan radial passant par le centre des éléments roulants 6, sont formées dans l'alésage 2a de la bague extérieure 2, la rainure 8 étant adjacente à la surface radiale 2b, la rainure 9 étant adjacente à la surface radiale 2c.

La bague intérieure 4 est également pourvue de deux surfaces latérales radiales 4b, 4c opposées, respectivement dans le même plan radial que les surfaces 2b et 2c, et d'un alésage 4d.

Un premier moyen d'étanchéité principal sous la forme d'un organe d'étanchéité référencé 10 dans son ensemble est fixé sur la bague extérieure 2, axialement du côté des éléments roulants 6 opposé à l'ensemble capteur 16. L'organe d'étanchéité 10, du type joint à lèvre, comprend une armature rigide métallique 11 en forme générale de disque, sur laquelle est surmoulée une partie élastique 12 réalisée en caoutchouc par exemple. La partie élastique 12 est annulaire et comprend à son extrémité de plus grand diamètre un bourrelet 13 monté à force dans la rainure 9 de la bague extérieure 2. La partie élastique 12 comprend à son extrémité de plus petit diamètre une lèvre d'étanchéité 14 en contact de frottement dynamique sur la surface extérieure 4a de la bague intérieure 4.

L'organe d'étanchéité 10 est de type standard dans les roulements non instrumentés, et garantit l'étanchéité à l'encontre de la pollution extérieure et des fuites du lubrifiant, graisse par exemple, disposé à l'intérieur du roulement 1.

Un ensemble capteur 16 comprend un codeur 17 comprenant un support annulaire 18 réalisé en matériau synthétique moulé par injection par exemple, de forme générale annulaire, en contact avec la face latérale 2b de la bague extérieure 2, et pourvu d'une partie de fixation sous la forme d'un bourrelet annulaire 19 en saillie dans la rainure 8 de l'alésage 2a de la bague extérieure 2. Le bourrelet annulaire 19 assure la fixation du support annulaire 18 sur la bague extérieure 2. On peut ainsi utiliser pour la fixation du codeur 17 la rainure 8, qui est un élément standard, initialement prévue pour le montage d'un joint. On pourrait utiliser à la place du bourrelet annulaire 19 un autre moyen de fixation comme une couronne de crochets.

Le support annulaire 18 comprend un alésage 20 dans lequel est formé du côté opposé au roulement 1 une rainure annulaire 21 dont les dimensions et le profil sont identiques aux rainures 8 et 9. La surface extérieure du support annulaire 18 est située sensiblement dans le prolongement de la surface extérieure 2d de la bague extérieure 2.

Le codeur 17 comprend une partie active 22 annulaire disposée approximativement au milieu de l'alésage 20 du support annulaire 18. La partie active 22 peut être par exemple un anneau magnétique multipolaire ou une succession de parties réfléchissantes et non réfléchissantes alternées.

L'ensemble capteur 16 comprend un bloc capteur 23 comprenant une armature métallique 24 sous forme d'une coupelle annulaire pourvue d'une première portion cylindrique 25, dont le diamètre est compris entre le diamètre de l'alésage 4d et le diamètre extérieur de la bague intérieure 4, une portion radiale 27 en appui sur la surface radiale 4b de la bague intérieure 4 s'étendant radialement vers l'extérieure à partir de l'extrémité de la portion cylindrique 25 du côté de la bague intérieure 4, et une seconde portion cylindrique 26 de diamètre sensiblement égal au diamètre extérieur de la bague intérieure 4, s'étendant axialement à partir de la zone de plus grand diamètre de la portion radiale 27 du côté opposé à la portion cylindrique 25. La portion cylindrique 26 de l'armature métallique 24 peut, par exemple, être emmanchée à force sur la surface extérieure 4a de la bague intérieure 4 de roulement jusqu'au contact de la portion radiale 26 et de la surface radiale 4b, pour assurer la fixation du bloc capteur sur la bague intérieure 4.

Le bloc capteur 23 comprend un corps de support 28 de forme générale annulaire, en matière synthétique surmoulée par injection sur l'armature métallique 24 par exemple. Le corps de support 28 solidaire de l'armature 24 possède un alésage 28a de diamètre intérieur sensiblement égal ou supérieur au diamètre intérieur de l'alésage 4d de la bague intérieure 4. Le corps de support 28 s'étend axialement à partir de l'armature métallique 24 du côté opposé au roulement 1, sa longueur axiale étant supérieure à la longueur axiale du support annulaire 18 du codeur 17.

Le corps de support 28 comprend une portion radiale 29 annulaire en regard de la partie active 22 du codeur 17 adjacente au roulement 1. Un capteur 30 disposé dans la portion radiale 29 est orienté radialement vers l'extérieur, en affleurant la surface extérieure de la portion radiale 29. Une portion cylindrique 29a s'étend axialement à partir de la zone de plus grand diamètre de la portion radiale 29 en recouvrant au moins en partie la portion cylindrique 26 de l'armature métallique 24, dans l'espace compris entre la bague extérieure 2 et la bague intérieure 4.

Le corps de support 28 possède une portion cylindrique 31 s'étendant axialement à partir d'une zone de petit diamètre de la portion radiale 29, à l'opposé de la portion cylindrique 29a, en étant radialement sensiblement au niveau de la bague intérieure 4. Ladite portion cylindrique 31 est de diamètre extérieur sensiblement égal au diamètre extérieur de la bague intérieure 4. La portion cylindrique 31 comprend du côté opposé au roulement 1 une surface radiale d'extrémité 32 de forme annulaire, et une partie de sortie 33 pour un câble conducteur électrique 34, qui s'étend radialement et obliquement du côté opposé au roulement 1, la partie de sortie 33 faisant saillie radialement par rapport la portion cylindrique 31. Le câble conducteur électrique 34 est relié au capteur 30 à une extrémité et à des moyens de traitement non représentés à une autre extrémité de façon non représentée.

Si la partie active 22 est une succession de parties réfléchissantes et non réfléchissantes, le capteur 30 est du type optique. Si la partie active 22 est une couronne magnétique multipolaire, le capteur 30, est du type magnéto-sensible, par exemple une cellule à effet Hall. D'autres types de codeurs et de capteurs peuvent convenir.

L'exemple illustré ne comporte qu'un capteur 30. Bien entendu, plusieurs capteurs pourraient être disposés sur le corps de support 28 sans sortir du cadre de l'invention.

Un second moyen d'étanchéité sous la forme d'un organe d'étanchéité référencé 35 dans son ensemble est fixé dans la rainure 21 du support annulaire 18 et vient en contact de frottement dynamique sur la surface extérieure cylindrique de la portion cylindrique 31 du corps de support 28. L'organe d'étanchéité 35, sous la forme d'un joint à lèvre, coopère avec la surface extérieure de la potion cylindrique 31 pour assurer l'étanchéité à l'encontre de la pollution extérieure.

L'organe d'étanchéité 35 est identique à l'organe d'étanchéité 10, et permet ainsi une standardisation de cet élément et une réduction des coûts. L'organe d'étanchéité 35 peut être fixé sur la bague non tournante 2, dans la rainure 8, qui est de profil identique à la rainure annulaire 21. Ainsi, on peut utiliser les organes d'étanchéité d'un roulement standard, pour réaliser l'étanchéité du même roulement instrumenté, après l'ajout de l'ensemble capteur 16. La fixation de l'ensemble capteur 16 est simplifiée par l'utilisation de la rainure annulaire 8. On peut envisager que l'organe d'étanchéité 35 soit différent de l'organe d'étanchéité 10, mais soit toutefois un joint utilisé dans la gamme de dimensions des roulements standards.

L'organe d'étanchéité 35 se situe axialement à proximité de la portion radiale 29, de sorte qu'il forme un passage étroit axial avec une surface radiale 29b de la portion radiale 29 en regard de l'organe d'étanchéité 35.

Ainsi, l'organe d'étanchéité 35 coopère à la fois avec la surface extérieure de la portion cylindrique 31 et la portion radiale 29, de façon qu'il forme un premier moyen d'étanchéité coopérant avec une surface cylindrique et un second moyen d'étanchéité par passage étroit radial. Cette étanchéité accrue permet de protéger l'entrefer de l'ensemble capteur vis-à-vis de l'intrusion de corps étrangers, et protège en même temps le roulement lui-même.

La partie active 22 du codeur 17 et le capteur 3 se situent hors de l'espace compris entre les bagues intérieure 4 et extérieure 2 du palier à roulement 1, ce qui permet d'utiliser un palier à roulement compact radialement. Le bloc capteur 23 et le codeur 17 sont fixés simplement sur les bagues intérieure 4 et extérieure 2, sans que les bagues 2, 4 ne nécessitent des opérations supplémentaires de fabrication pour permettre la fixation du codeur 17 et du bloc capteur 23. Notamment, le codeur 17 comprend un bourrelet 19 en saillie dans une rainure 8 similaire avec la rainure 9 de fixation de l'organe d'étanchéité 10. La bague extérieure 2 est une bague du type standard prévue pour la fixation d'organes d'étanchéité. La rainure 8 pourrait servir comme la rainure 9 à la fixation d'un organe d'étanchéité. Le codeur 17 est fixé sur la bague extérieure 2 par interférence radiale du bourrelet 19 dans la rainure 8, sans modification de la bague extérieure 2 standard. Le bloc capteur 23 est simplement emmanché sur une surface extérieure 4d de la bague intérieure 4 en venant en appui sur une surface latérale 4b, sans modification de la bague intérieure 4 standard. Seule une portion cylindrique 29a du corps de support 28 et une portion cylindrique 26 d'une armature 24 du bloc capteur 23 se situent dans l'espace entre les bagues intérieure 4 et extérieure 2 pour l'emmanchement du bloc capteur 16, sans nécessité d'opération de fabrication supplémentaire pour la bague intérieure 4. Les moyens de fixation du bloc capteur 23 et du codeur 17 permettent l'utilisation de bagues 2, 4 standard.

Le codeur 17 et le bloc capteur 23 situés principalement hors de l'espace compris entre les bagues 2, 4 permettent l'utilisation d'un palier à roulement 1 compact radialement. Le codeur 17 et le bloc capteur 23 situés latéralement dans le prolongement axial des bagues 2, 4 présentent un encombrement radial sensiblement égal au palier à roulement 1, ce qui facilite le montage de l'ensemble dans une portée cylindrique intérieure. Le codeur 17 et le bloc capteur 23 décalés permettent d'adapter la position axiale de l'entrefer de l'ensemble capteur 16 sans être limité par les bagues 2, 4, contrairement au cas où une partie active 22 du codeur 17 ou un capteur 30 du bloc capteur 23 se situe totalement ou en partie entre les bagues 2, 4.

L'assemblage du dispositif est particulièrement aisé. Il suffit d'emmancher le bloc capteur sur la bague intérieure. On vient ensuite encliqueter le support annulaire 18 dans la rainure 8 de la bague extérieure 2. Enfin, on vient encliqueter l'organe d'étanchéité 35 dans la rainure 21 du support annulaire 18 après avoir passé l'alésage de l'organe d'étanchéité 35 autour du câble conducteur 34 et fait remonter l'organe d'étanchéité 35 le long du câble conducteur 34, puis fait passer obliquement l'organe d'étanchéité 35 autour de la partie de sortie 33.

L'ensemble capteur 16 et le roulement 1 se trouvent alors enfermés dans une enceinte parfaitement étanche.

Un véhicule à deux roues comprend une fourche à deux extrémités représentée en partie dont une extrémité 36 du côté du roulement 1 où est disposé l'ensemble capteur est représentée sur la figure 1. L'extrémité 36 comprend un trou traversant 36a dans lequel est insérée l'extrémité filetée 37 d'un axe de roue 38 fixé entre les deux extrémités de la fourche. Un écrou 39, disposé sur l'extrémité filetée 37 du côté de l'extrémité 36 de la fourche opposé au roulement 1, maintient l'axe de roue 38.

Le roulement 1 et l'ensemble capteur 23 sont montés sur l'axe de roue 38. Une entretoise 40 en forme de manchon, montée sur l'axe de roue 38, est pourvue d'un côté d'une surface radiale 40a en appui sur l'extrémité 36 de la fourche, et de l'autre côté d'une surface radiale 40b en appui sur la surface radiale 32 du corps de support 28. Une seconde entretoise 41 montée sur l'axe de roue 38 du côté du roulement 1 opposé à l'entretoise 40, est pourvue d'une surface radiale 41a en appui sur la surface radiale 4c de la bague intérieure 4. Le diamètre de l'axe de roue 38 est sensiblement égal à l'alésage 4d de la bague intérieure 4.

Un moyeu de roue 42 comprend un alésage 42a dans lequel est formée une portée cylindrique 43 du côté de l'extrémité 36 de la fourche, formant un épaulement intérieur 42b dans l'alésage 42a. La portée cylindrique 43 s'étend axialement de l'épaulement 42b à une surface radiale 42c d'extrémité du moyeu 42. Le moyeu est monté à rotation sur l'axe de roue 38 par l'intermédiaire du roulement 1. La bague extérieure 2 et le support annulaire 18 sont disposés dans la portée 43 du moyeu 42. La surface radiale 2c de la bague extérieure 2 vient en contact avec l'épaulement 42b de l'alésage 42a. La bague extérieure 2 est fixée dans la portée 43. La longueur axiale de la portée 43 est sensiblement égale à la longueur axiale de la bague extérieure 2 et du support annulaire 18 du codeur 17.

La roue est symétrique par rapport à un plan de symétrie, perpendiculaire à l'axe de rotation de la roue. La roue comprend un deuxième roulement non représenté sur la figure, similaire au roulement 1 mais non instrumenté, dont une surface radiale de la bague intérieure vient en appui sur une surface radiale de l'entretoise 41 opposée à la surface radiale 41a de l'entretoise 41, et maintenu axialement du côté opposé à l'entretoise 41 par une entretoise similaire à l'entretoise 40 et plus long, disposé entre la seconde extrémité de la fourche et la bague intérieure dudit roulement.

Lors de la rotation de la roue, la bague extérieure 2 tourne à la même vitesse que la roue alors que la bague intérieure 4 reste immobile en rotation relativement à l'axe de roue. La partie active 22 du codeur 17 fixé sur la bague extérieure 2, défile à rotation devant le capteur 30.

Le roulement instrumenté selon l'invention est adapté au montage du roulement dans un dispositif de fixation d'une roue avant d'un véhicule à deux roues, car il offre une étanchéité améliorée. Or, sur un véhicule à deux roues, le dispositif de fixation de la roue avant est particulièrement exposé à la pollution, aux projections, et à l'intrusion de corps étrangers. De plus, la compacité du dispositif suivant l'invention favorise son intégration dans un moyeu de roue.

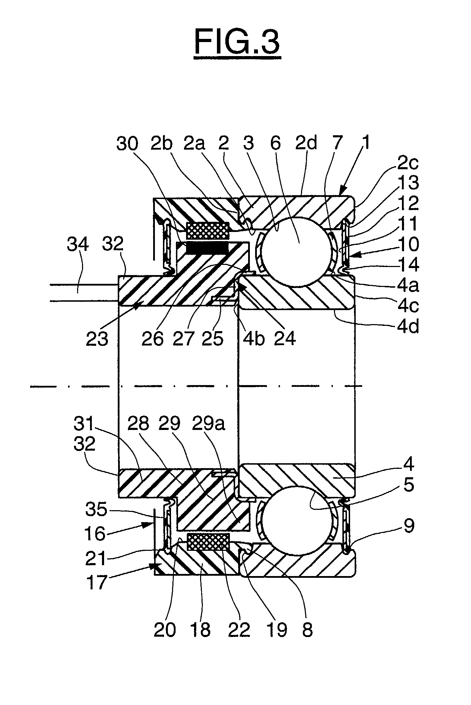

Sur la figure 3, les références des éléments semblables à ceux de la figure 1 ont été conservées. Le câble conducteur 34 s'étend axialement à partir de la surface 32, du côté opposé au roulement 1.

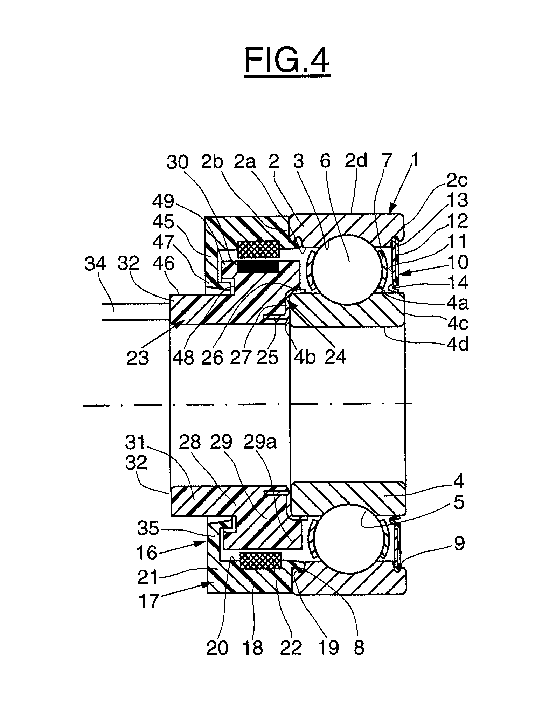

Sur la figure 4, les références des éléments semblables à ceux de la figure 3 ont été conservées. Le codeur 17 comprend une portion radiale 45 qui s'étend radialement vers l'intérieur à partir de l'extrémité du support annulaire 18 opposée au roulement 1, en venant à proximité de la surface extérieure cylindrique 46 de la portion cylindrique 31. Une portion axiale 47, possédant un alésage tronconique 47a de diamètre supérieur du côté axialement opposé au roulement 1, s'étend axialement en direction de la portion radiale 29, à partir de la zone de plus petit diamètre de la portion radiale 45, en venant à proximité d'une surface radiale 48 de la portion radiale 29, adjacente à la portion cylindrique 31. Une portion annulaire 49 s'étend axialement en direction de la portion radiale 45, et jusqu'à proximité de la portion radiale 45, à partir de la zone de plus grand diamètre de portion radiale 29, en entourant en partie la portion axiale 47, et en formant une nervure annulaire 50 entre la portion annulaire 49 et la portion cylindrique 31, limitée axialement du côté de la portion radiale 29 par la surface radiale 48 de la portion radiale 29.

L'alésage 47a de la portion axiale 47 forme un passage étroit tronconique avec la surface extérieure cylindrique 46 de la portion cylindrique 31, assurant une étanchéité supplémentaire vis-à-vis de la pollution. De plus, la centrifugation des éléments polluants sur l'alésage tronconique 47a qui va en s'évasant vers l'extérieur, donne naissance à des efforts qui tendent à repousser lesdits éléments polluants vers l'extérieur du dispositif. La portion axiale 47 venant dans la nervure 50 à proximité de la surface radiale 48 forme un chemin par passage étroit, radialement avec la surface radiale 48 de la portion radiale 29, et axialement avec la portion annulaire 49. La portion annulaire 49 forme un passage étroit radial avec la surface radiale orientée du côté du roulement 1 de la portion radiale 45.

Ainsi, la portion radiale 45, s'étendant radialement depuis le codeur 17 vers le bloc capteur 23, de façon à former un passage étroit en coopération avec la surface extérieure de la portion cylindrique 31, offre une étanchéité vis-à-vis de la pollution extérieure. Cette étanchéité est améliorée par une succession de passages étroits entre des surfaces radiales en regard de la portion radiale 45 et de la portion radiale 29, et entre des surfaces cylindriques en regard de la portion radiale 45 et de la portion radiale 29.

Le dispositif d'étanchéité pour palier à roulement instrumenté permet donc d'obtenir facilement une excellente étanchéité évitant la pollution de l'entrefer de l'ensemble codeur par l'intrusion d'éléments extérieurs. Le dispositif d'étanchéité associe un premier moyen d'étanchéité principale coopérant avec une surface de révolution du bloc capteur auquel on peut associer un second moyen d'étanchéité coopérant avec une surface radiale du bloc capteur de façon à former un passage étroit renforçant l'efficacité du premier moyen d'étanchéité.

L'invention permet en outre l'utilisation d'éléments standards tant pour les moyens d'étanchéité que pour la retenue du codeur sur le roulement, permettant ainsi de réaliser de substantielles économies par standardisation des éléments. Enfin, le dispositif d'étanchéité est particulièrement facile à monter sur les paliers à roulement instrumentés et sa compacité favorise son utilisation dans de nombreuses applications.

## Revendications

1. Dispositif d'étanchéité pour un palier à roulement instrumenté comprenant une bague intérieure (4), une bague extérieure (2), au moins une rangée d'éléments roulants (6) entre un chemin de roulement (5) de la bague intérieure et un chemin de roulement (3) de la bague extérieure, un ensemble capteur d'informations (16) comprenant un bloc capteur (23) en appui sur une face latérale de la bague intérieure (4), et un codeur (17) en appui sur une face latérale de la bague extérieure (2), ledit codeur (17) comprenant un support annulaire(18) et une partie active (22), **caractérisé par le fait qu'**il comprend un premier moyen d'étanchéité apte à coopérer avec une surface de révolution du bloc capteur, la portion du bloc capteur (23) supportant le capteur est située radialement à l'intérieur du codeur (17) et axialement entre le moyen d'étanchéité et le palier à roulement.

2. Dispositif selon la revendication 1, **caractérisé par le fait que** le premier moyen d'étanchéité est un joint à lèvre (35).

3. Dispositif selon l'une quelconque des revendications 1 ou 2, **caractérisé par le fait que** le palier à roulement comprend du côté axialement opposé à l'ensemble capteur un moyen d'étanchéité (10) identique au premier moyen d'étanchéité.

4. Dispositif selon l'une quelconque des revendications précédentes, **caractérisé par le fait qu'**il comprend un second moyen d'étanchéité par passage étroit.

5. Dispositif selon la revendication 2, **caractérisé par le fait que** le joint à lèvres (35) comprend une paroi radiale orientée du côté du bloc capteur (23) apte à coopérer avec une surface radiale (29a) du bloc capteur (23) pour former un second moyen d'étanchéité par passage étroit.

6. Dispositif selon la revendication 1, **caractérisé par le fait que** le codeur comprend une portion radiale (45) adjacente à une surface radiale (48) du bloc capteur pour former un second moyen d'étanchéité par passage étroit.

7. Dispositif selon la revendication 6, **caractérisé par le fait que** la portion radiale (45) comprend une portion axiale (47) s'étendant axialement à partir de la zone de plus petit diamètre de la portion radiale (45), à proximité d'une surface cylindrique (46) du bloc capteur, pour former le premier moyen d'étanchéité par passage étroit.

8. Dispositif selon l'une quelconque des revendications 6 ou 7, **caractérisé par le fait que** des portions radiales (45, 29) du bloc capteur (23) et du codeur (17) forment le second moyen d'étanchéité par une succession de passages étroits.

9. Dispositif selon l'une quelconque des revendications précédentes, **caractérisé par le fait que** le codeur comprend une partie de fixation (19) en saillie dans une rainure de la bague extérieure (2).

10. Palier à roulement instrumenté comprenant une bague intérieure (4), une bague extérieure (2), au moins une rangée d'éléments roulants (6) entre un chemin de roulement (5) de la bague intérieure (4) et un chemin de roulement (3) de la bague extérieure (2), un ensemble capteur d'informations (16) comprenant un bloc capteur (23) en appui sur la bague intérieure (4), et un codeur (17) en appui sur la bague extérieure (2) comprenant un support annulaire (18), une partie active (22), **caractérisé par le fait qu'**il comprend un dispositif d'étanchéité selon l'une quelconque des revendications précédentes.
